# EUROPÄISCHE PATENTSCHRIFT

(11) **EP 3 498 784 B1**
(45) Veröffentlichungstag und Bekanntmachung des Hinweises auf die Patenterteilung: **26.08.2020**
(21) Anmeldenummer: 17207816.4
(22) Anmeldetag: 15.12.2017
(51) Int. Cl.: C09D 5/00

(54) **BESCHICHTUNGSMASSE, VERFAHREN ZUR HERSTELLUNG DER BESCHICHTUNGSMASSE UND DEREN VERWENDUNG**
COATING COMPOSITION, METHOD FOR PRODUCING THE COATING COMPOSITION AND ITS USE
SUBSTANCE DE REVÊTEMENT, PROCÉDÉ DE FABRICATION DE LA SUBSTANCE DE REVÊTEMENT ET SON UTILISATION

(43) Veröffentlichungstag der Anmeldung: 19.06.2019
(73) Patentinhaber: DAW SE, 64372 Ober-Ramstadt (DE)
(72) Erfinder: LASSACHER, Paul, 4020 Linz (AT); ETZELSDORFER, Wilfried, 4320 Perg (AT)
(74) Vertreter: Metten, Karl-Heinz

(56) Entgegenhaltungen:
- EP-A1- 3 002 318
- WO-A1-2007/034444
- US-A1- 2002 009 622
- US-A1- 2013 052 452

## Beschreibung

Die vorliegende Erfindung betrifft eine, insbesondere pastöse, Zusammensetzung für Beschichtungsmassen sowie deren Verwendung als Anstrich oder Putz und ein Herstellungsverfahren für die Beschichtungsmasse.

Beschichtungsmassen finden in den verschiedensten Formen Verwendung und sind sowohl für den Innen- als auch für den Außeneinsatz bekannt. Eine bekannte Problemstellung ist es, dass die mit den Zusammensetzungen erhaltenen Oberflächen verschiedenen Temperaturen und Luftfeuchtigkeiten ausgesetzt sind und es daher jahreszeitenabhängig nicht dauerhaft vermieden werden kann, dass Bakterien, Schimmel oder Algen günstige Lebensbedingungen vorfinden.

Die aus dem Stand der Technik bekannte und übliche Lösung ist die Zugabe von organischen Bioziden, insbesondere organischen Algiziden und Fungiziden. Diese Biozide sind oftmals recht effektiv, um Bakterienbeläge, Schimmelbefall und Algenbefall zu verhindern. Aus dem Stand der Technik bekannte Biozide sind beispielsweise 2-Methoxycarbonylaminobenzimidazol, 2-Mercaptopyridin-N-oxid, n-Octylisothiazolon und Iodpropinylbutylcarbamat, 1,1-Dimethyl-3-(3,4-dichlorphenyl)harnstoff (Diuron) und tButyl-ethyl-6-methylthio-1,3,5-triazin-2,4-diamin (Terbutryn).

DE 4242389 C2 beschreibt eine Biozidzusammensetzung für Farben, Lacken und Putze, wobei als Fungizid Carbendazim sowie 2-(Thiocyanomethylthio)benzothiazol (TCMTB) und als Algizid 2-Methylthio-4-t-butylamino- 6-cyclopropylamino-s-triazin verwendet wird.

DE 10 2005 045 129 A1 beschreibt beispielsweise ein Konservierungsmittel für Beschichtungszusammensetzungen, das Isothiazolon, eine quartäre Ammoniumverbindung und einen Stabilisator umfasst.

WO 2004 000 953 A1 beschreibt eine Beschichtungsmasse zum Schutz gegen Mikroorganismenbefall von Oberflächen, die der Einwirkung von Feuchtigkeit oder Wasser ausgesetzt sind, wobei die Beschichtungsmasse entweder selbst einen pH-Wert von mindestens 11,0 aufweist oder für das Beschichten eines Untergrundmaterials vorgesehen ist, dessen pH-Wert mindestens 11,0 beträgt, wobei die Beschichtungsmasse ein Biozid enthält, das in einem Trägermaterial aus Feststoffteilchen gebunden ist und daraus verzögert freigegeben wird.

DE 10144187 A1 beschreibt ein Konservierungsmittel für Beschichtungszusammensetzungen, welches eine oder mehrere, quartäre Ammoniumverbindungen und ein oder mehrere Alkalisierungsmittel, ausgewählt aus Alkalimetallhydroxid, -carbonat, -hydrogencarbonat und -silikat, Erdalkalioxid, -hydroxid, -hydrogencarbonat und -silikat und Al(OH)₃ umfasst.

Die stetige Übertragung des Biozids in ein wässriges System ist Grundvoraussetzung für die Bioaktivität. Biozide sind regelmäßig nur in wässrigen Systemen an der Oberfläche gegen Bakterien, Schimmel oder Algen wirksam. Daher sind geeignete organischen Biozide zu einem gewissen Maße wasserlöslich, werden mithin durch Regen ausgewaschen oder bei hoher Luftfeuchtigkeit mit Kondenswasser ausgeschieden. Dies hat Nachteile für die Umwelt, insbesondere falls Biozide in Gewässern nicht abgebaut werden.

Auch Beschichtungsmassen ohne organische Biozide sind aus dem Stand der Technik bekannt.

DE 3 932 990 C2 offenbart ein Verfahren zur Konservierung von Natursteinen, Naturwerksteinen und historischen Putzen, insbesondere Baudenkmälern unter Verwendung von Lithiumsilikaten, wobei eine wäßrige, natrium-, kalium- und polymerfreie Lithiumpolysilikatlösung mit einer maximalen Viskosität von 10 mPas, einem maximalen Feststoffgehalt von 30 Gew.-% und einem Li₂O/SiO₂-Verhältnis von 1:3,5 bis 1:7 in situ verwendet wird.

DE 10 2006 049 923 B4 offenbart eine Dispersion zur Behandlung von organischem und/oder anorganischem Material gegen Schimmelpilze, Bakterien und/oder Algen gebildet aus einem alkoholischen Dispersionsmittel und einer dispersen Phase aus kolloidalen Calciumhydroxid-Partikeln. Diese Partikel haben dabei einen mittleren Partikeldurchmesser von 0,01 bis 10 µm aufzuweisen, und ihre Konzentration in der Dispersion liegt bei 0,01 bis 15 Gew.-%.

Die EP 3 002 318 A1 offenbart ein Verfahren zur Herstellung einer wässerigen Suspension, umfassend mindestens ein Calciumcarbonat enthaltendes Material und die Verwendung des Calciumcarbonat enthaltenden Materials in Papier- und Kartonanwendungen, in Kosmetika, in Abdicht- und Dichtstoffen, in Klebstoffen sowie in Farben und Beschichtungen.

Die US 2013/052452 A1 offenbart Mikropartikel, die ein Feuerlöschmittel oder eine Kombination von Feuerlöschmitteln einkapseln, ein Verfahren zur Herstellung dieser Mikrokapseln, ein Verfahren zur Verwendung solcher Mikrokapseln und Herstellungsgegenstände, die mindestens eines dieser Mikropartikel entweder in einer Beschichtung oder in einer eine Struktur aufbauenden Matrix umfassen Bestandteil des Herstellungsartikels offenbart.

Die US 2002/009622 A1 offenbart eine aufgesprühte Phosphatzementbeschichtung, gebildet aus der Kombination und Reaktion einer Phosphorsäurelösung und einer unedlen Metalllösung. Die Säurelösung und die Basenlösung können vor dem Spritzen, während des Sprühens oder auf einem Substrat gemischt werden. Die Härtungsreaktionsrate der Phosphat-Zementbeschichtung und ihre endgültigen physikalischen Eigenschaften können durch Zugabe verschiedener Verzögerer, Beschleuniger, Reduktionsmittel, Benetzungsmittel, Superplastifizierungsmittel, Puffer, Wasser-Reduktionsmittel, Haftmittel, Härtungsmittel und / oder Maskierungsmittel gesteuert werden . Die Härtungsgeschwindigkeit und die Eigenschaften der Zementbeschichtung können weiter durch Einstellen der Temperatur der Vorläuferlösungen und/oder des Zielsubstrats gesteuert werden.

Die WO 2007/034 444 A1 offenbart ein Verfahren zur Herstellung von Wärmezellen. Die Wärmezellen umfassen eine exotherme Zusammensetzung, die ein absorbierendes Geliermaterial umfasst, wobei das absorbierende Geliermaterial für eine verbesserte Wärmeanwendung bei der Linderung temporärer oder chronischer Schmerzen sorgt.

Kalkmörtel sind ebenfalls bekannt. Hierbei handelt es sich im Regelfall um eine Mischung aus Sand und gelöschtem Kalk (Calciumhydroxid). Das Calciumhydroxid reagiert als Bindemittel mit Kohlenstoffdioxid aus der Luft zu Kalk, wobei letzterer nicht mehr basisch ist. Es wird üblicherweise ein Verhältnis von Sand zu Kalk von 2:1 bis 5:1 gewählt (https://de.wikipedia.org/wiki/Kalkmörtel, Stand 8.5.2017).

Ein Vorteil ist, dass die anorganische Base kaum eine Gefahr für die Umwelt darstellt. Ein Nachteil der vorstehend genannten Putze ist, dass die Wirkung gegen Schimmel und Algen meist nicht besonders lange anhält.

Der vorliegenden Erfindung hat daher die Aufgabe zugrunde gelegen, eine Beschichtungsmasse bereitzustellen, welche nicht mit den geschilderten Nachteilen des Stands der Technik behaftet ist und die insbesondere eine verbesserte Langzeitwirkung gegen Schimmel und Algen aufweist und vorzugsweise zudem in hohem Maße umweltverträglich ist. Eine weitere Aufgabe ist es, eine Beschichtungsmasse bereitzustellen, die eine bessere Haftung als herkömmliche Beschichtungsmassen mit gelöschtem Kalk als Bindemittel aufweist.

Demgemäß wurde eine, insbesondere pastöse, Beschichtungsmasse, insbesondere für Innenräume, gefunden, enthaltend oder bestehend aus a) mindestens einem Füllstoff, b) Calciumhydroxid, wobei Calciumhydroxid in einer Menge von 0,1 bis 10 Gew.-% vorliegt, c) Wasser und d) mindestens einem Bindemittel, Pigment und/oder Additiv, insbesondere mindestens einem Bindemittel, mindestens einem Pigment und mindestens einem Additiv, sowie mindestens einem Alkalihydroxid in einer Menge (Feststoffanteil) im Bereich von 0,001 Gew.-% bis 0,1 Gew.-%.

Die erfindungsgemäße Beschichtungsmasse enthaltend Calciumhydroxid weist in der Gegenwart von dem mindestens einem Alkalihydroxid, insbesondere Kaliumhydroxid, über einen besonders langen Zeitraum einen stabilen alkalischen pH-Wert auf, der mit einer algiziden und/oder fungiziden Wirkung, insbesondere mit einer algiziden und fungiziden Wirkung, verbunden ist. Es hat sich gezeigt, dass die biozide Langzeitwirkung gegenüber sonst identischen erfindungsgemäßen Beschichtungsmassen ohne Alkalibasen nochmals erheblich verbessert ist. Ohne an eine Theorie gebunden zu sein, wird gegenwärtig vermutet, dass die Alkalibase ein Abbinden des Calciumhydroxides verhindert, so dass die erfindungsgemäße Beschichtungsmasse den alkalischen pH-Wert über einen langen Zeitraum, vorzugsweise über mehrere Jahre, behält, und zwar selbst dann, wenn sie in Innenräume mit einem gesteigerten Kohlenstoffdioxidanteil verwendet wird. Dieser gesteigerte Kohlenstoffdioxidanteil ist in Wohnräumen meist unvermeidbar, da Menschen und Tiere beim Ausatmen Kohlenstoffdioxid abgeben.

Die erfindungsgemäße Beschichtungsmasse liegt bevorzugt in pastöser Form bzw. als pastöse Masse vor. Unter einer pastösen Masse wird im Sinne der Erfindung vorzugsweise ein Feststoff-Flüssigkeitsgemisch mit einem hohen Gehalt an Festkörpern verstanden, so dass die pastöse Masse nicht mehr fließfähig, sondern streichfest ist. Vorzugsweise weist die vorliegende pastöse Zusammensetzung bzw. pastöse Masse eine Viskosität η von 10 mPas bis 70 mPas auf. Das Viskositäts- bzw. Rheologie-Verhalten der erfindungsgemäßen Beschichtungsmassen kann in einer geeigneten Ausgestaltung mittels eines Rotationsrheometers bestimmt werden. Die Viskositäten η der erfindungsgemäßen Beschichtungsmassen sind gemäß DIN 53019 (Ausgabe 05/1980) zu ermitteln. Diese Viskositäten η lassen sich mit dem Rotationsrheometer Haake Rheostress 1 der Firma Thermo Scientific unter Verwendung der Software Haake Rheo Win Version 4.30.0030 bestimmen. Um vergleichbare Ergebnisse zu erhalten, sollten die Messungen bei konstanter Raumtemperatur, beispielsweise bei 23 °C ±0,20 °C vorgenommen werden. Im Allgemeinen reicht es aus, eine Rotationsrampe von 0 bis 1500 l/s im Zeitraum von 180 s zu fahren. Hierbei wird die Messung derart vorgenommen, dass zunächst für 180 s das Messsystem temperiert wird, anschließend über 180 s die Rotationsgeschwindigkeit von o auf 1500 l/s gesteigert und sodann für weitere 180 s die Rotationsgeschwindigkeit von 1500 auf o l/s zurückgefahren wird. Die Viskosität η wird dabei aus dem dritten Segment (absteigender Ast) bei 400 l/s und 1200 l/s ermittelt. Form und Material bzw. die Messgeometrie der Messapparatur bzw. des Rotors basieren zweckmäßigerweise auf der Spezifikation Z20DIN.

Als Additive können Entschäumer, Stabilisatoren, Netzmittel, Dispergiermittel, insbesondere auf Polyacrylatbasis, Flammschutzmittel, Hydrophobierungsmittel, Mattierungsmittel, Oberflächenadditive, insbesondere Silikonoberflächenadditive, beispielsweise polyethermodifiziertes Polymethylalkylsiloxan und/oder Silikonpolyether-Copolymere, Rheologieadditive, beispielsweise Verdickungsmittel, Puffersubstanzen, Neutralisationsmittel, pH-Regulatoren, UV-Absorber oder Radikalfänger und beliebige Mischungen dieser Verbindungen eingesetzt werden. In besonders einer geeigneten Ausgestaltung werden abgesehen von den pH-Regulatoren, die explizit in der vorliegenden Anmeldung genannt sind, keine weiteren pH-Regulatoren eingesetzt. Vorzugsweise enthält die Zusammensetzung mindestens zwei, drei oder mehr Additive, wie sie in der vorliegenden Anmeldung beschrieben werden.

Die, insbesondere pastöse, Beschichtungsmasse ist vorzugsweise alkalisch eingestellt und hat besonders bevorzugt einen pH-Wert im Bereich von 9,0 bis 11,5, insbesondere im Bereich von 10,0 bis 11,5. Erfindungsgemäße Beschichtungsmassen mit einem pH-Wert in dem vorangehend genannten Bereich zeichnen sich regelmäßig bereits durch eine hinreichende algizide und fungizide Wirkung aus. Mit den erfindungsgemäßen Beschichtungsmassen ist es nicht mehr notwendig, einen pH-Wert größer 11,5 zu wählen, um diese Wirkung zu erhalten. Herkömmliche Mischungen von gelöschtem Kalk sind üblicherweise stark alkalisch, d.h. weisen einen pH-Wert größer 12 auf. Diese pH-Werte haben zwar eine mindestens ebenso gute algizide und fungizide Wirkung, wirken aber gleichzeitig stark ätzend, so dass der Umgang mit der Beschichtungsmasse gefährlich ist und auch nach dem Auftragen und Trocknen Verätzungen bei einer Befeuchtung nicht auszuschließen sind. Es hat sich überraschenderweise gezeigt, dass auch schon mit solchen erfindungsgemäßen Beschichtungsmassen, bei denen der pH-Wert im Bereich von 9,0 bis 11,5, insbesondere im Bereich von 10,0 bis 11,5 oder 11,0 liegt, eine optimale algizide und fungizide Wirkung erlangt wird.

In einer zweckmäßigen Ausführungsform verfügen die erfindungsgemäßen Beschichtungsmassen als Zusatzstoff ferner über mindestens ein oxidativ trocknendes, insbesondere mittelöliges und/oder langöliges, Alkydharz, insbesondere in Form von Leinölfirnis. In einer bevorzugten Ausführungsform liegen diese Alkydharz in den erfindungsgemäßen Beschichtungsmassen in einer Menge im Bereich von 0,01 bis 1,0, besonders bevorzugt im Bereich von 0,1 bis 0,5 Gew.-%, bezogen auf das Gesamtgewicht der Beschichtungsmasse, vor.

Bei geeigneten oxidativ trocknenden organischen langöligen Alkydharzen basiert der Langölanteil vorzugsweise auf Linolsäure, Linolensäure und/oder Ölsäure, gegebenenfalls unter Zusatz von Palmitinsäure. Hierbei sind Langölanteile enthaltend Linolsäure, Linolensäure, Ölsäure und Palmitinsäure besonders bevorzugt. Für den Mittelölanteil de r oxidativ trocknenden mittelöligen Alkydharze kann auf Linolsäure, Linolensäure und/oder Ölsäure, gegebenenfalls unter Zusatz von Palmitinsäure, zurückgegriffen werden. Hierbei sind Mittelölanteile enthaltend Linolsäure, Linolensäure, Ölsäure und Palmitinsäure besonders bevorzugt.

In den erfindungsgemäßen Beschichtungsmassen wird, sofern zugesetzt, als oxidativ trocknendes organisches Alkydharz bevorzugt auf Leinölfirnis zurückgegriffen.Ferner kann zusätzlich oder alternativ auch auf oxidierte Formen des Leinölfirnis als Zusatzstoff zurückgegriffen werden.

Unter einem langöligen Alkydharz sollen im Sinne der vorliegenden Erfindung solche langöligen Systeme verstanden werden, die einen Ölgehalt bzw. eine Öllänge oberhalb von 60 % aufweisen. Unter einem kurzöligen Alkydharz soll demgegenüber eine solche kurzölige Verbindung verstanden werden, die über einen Ölgehalt bzw. eine Öllänge verfügt, die üblicherweise im Bereich von 20 bis 40 % liegt. Für mittelölige Alkydharze liegt der Ölgehalt bzw. die Öllänge regelmäßig im Bereich von 40 bis 60 %. Unter dem Ölgehalt bzw. der Öllänge soll hierbei in Bezug auf das Gesamtgewicht des Alkdyharzes der gewichtsprozentige Anteil derjenigen Fettsäuren, einschließlich Polyolrest verstanden werden, die mit den Hydroxylgruppen der Polyoleinheiten im Alkydharz verbunden vorliegen. Im Sinne der vorliegenden Erfindung werden dadurch die Begriffe "Ölgehalt" und "Öllänge" synonym verwandt.

Erfindungsgemäß sind auch solche Beschichtungsmassen besonders vorteilhaft, die im Wesentlichen frei von organischen Bioziden, insbesondere Fungiziden und Algiziden, sind. Vorzugsweise ist die erfindungsgemäße Beschichtungsmasse frei von jeglichen Fungiziden und Algiziden, deren Wirkung nicht ausschließlich auf einer Änderung des pH-Werts basiert. Insbsesondere bevorzugt ist die Beschichtungsmasse frei von zusätzlichen Topfkonservierungsmitteln und/oder Filmkonservierungsmitteln, insbesondere im Wesentlichen frei von Topfkonservierungsmitteln und Filmkonservierungsmitteln. Eine erfindungsgemäße Beschichtungsmasse ist im Sinne der Erfindung auch dann als im Wesentlichen frei von organischen Bioziden anzusehen, wenn für deren Herstellung auf handelsübliche Komponenten zurückgegriffen wird, deren Lieferformen organischen Biozide beinhalten. Die erfindungsgemäßen Beschichtungsmassen sind insbesondere dann als im Wesentlichen frei an organischen Bioziden bzw. organischen Konservierungsmitteln zu betrachten, wenn nach Maßgabe der "Vergabegrundlage für Umweltzeichen" der RAL gGmbH für "Emissionsarme Innenwandfarben RAL-UZ 102" (Ausg. Januar 2015) keine organischen Biozide oder organischen Konservierungsmittel darin enthalten sind oder, jeweils bezogen auf das individuelle Konservierungsmittel, nicht mehr als 2 ppm (einschließlich Formaldehyd) und in Bezug auf 5-Chloro-2-methyl-4-isothiazolin (CIT) weniger als 0,5 ppm.

Die Nachteile von organischen Bioziden wurden bereits eingangs genannt. Es hat sich überraschenderweise gezeigt, dass die erfindungsgemäße Beschichtungsmasse auf organische Biozide oder sonstige Additive mit biozider oder algizider Wirkung verzichten kann und trotzdem eine optimale biozide Langzeitwirkung aufweist. Eine biozide Langzeitwirkung im Sinne der vorliegenden Erfindung ist dabei vorzugsweise eine algizide und/oder fungizide Wirkung, insbesondere eine eine algizide und fungizide Wirkung, welche mindestens mehrere Monate, vorzugsweise mehrere Jahre anhält. Vorzugsweise ist zumindest eine fungizide Wirkung umfasst, insbesondere eine fungizide und algizide Wirkung.

Besonders vorteilhaft wird unter den Alkalihydroxiden auf Kaliumhydroxid zurückgegriffen.

In einer besonders geeigneten Ausgestaltung ist es vorgesehen, dass das mindestens eine Alkalihydroxid, insbesondere Kaliumhydroxid, bezogen auf den Feststoffanteil, in einer Menge im Bereich von 0,002 Gew.-% bis 0,04 Gew.-% und besonders bevorzugt im Bereich von 0,002 Gew.-% bis 0,02 Gew.-% vorliegt. Hier hat sich überraschend gezeigt, dass bereits vergleichsweise geringe Zusätze von Alkalihydroxiden die biozide Langzeitwirkung erheblich beeinflussen.

In einer weiteren besonders bevorzugten Ausgestaltung der vorliegenden Erfindung ist die Menge (in Gew.-%) an Alkalihydroxiden, insbesondere Kaliumhydroxid, mindestens um den Faktor 5, insbesondere mindestens um den Faktor 10, vorzugsweise mindestens um den Faktor 50 geringer als die Menge an Calciumhydroxid. Es hat sich gezeigt, dass die biozide Langzeitwirkung bereits mit vergleichsweise wenig Alkalihydroxid, insbesondere Kaliumhydroxid, erreicht wird, insbesondere weniger von der Kalilauge verwendet werden kann, um die angestrebte Wirkung zu erzielen. Ferner ist die Menge an Calciumhydroxid vorzugsweise nicht mehr als den Faktor 10000, insbesondere 1000, höher als die Menge an Alkalihydroxid.

Insbesondere ist auch eine solche Ausführungsform bevorzugt, bei der Calciumhydroxid in einer Menge von 0,2 bis 5,0 Gew.-% und vorzugsweise 0,3 bis 1,5 Gew.-%, vorliegt, beispielsweise im Bereich von 0,3 bis 1,0 Gew.-%. Es hat sich gezeigt, dass die biozide Langzeitwirkung mit diesen Mengen besonders gut erreicht werden kann.

Ferner ist es bevorzugt, wenn Talk, insbesondere Talkum, enthalten ist. Talk hat eine wasserabweisende Wirkung und verringert die Geschwindigkeit des Austragens von Alkalihydroxiden, insbesondere von Kaliumhydroxid, wenn die Beschichtungsmasse mit Wasser in Kontakt kommt. Somit wird auch hierdurch, jedenfalls indirekt, die Langzeitwirkung verbessert. Beispielsweise kann in den erfindungsgemäßen Beschichtungsmassen o bis 25 Gewichtsprozent bzw. o bis 15 Gewichtsprozent an Talk vorliegen. Insbesondere ist es bevorzugt, wenn in den erfindungsgemäßen Beschichtungsmassen 0,1 bis 25 Gew.-%, insbesondere 1 bis 20 Gew.-% Talk und besonders bevorzugts bis 15 Gew.-% Talk enthalten ist. Vorzugsweise wird Talk in Form von Talkum verwendet.

In einer Ausgestaltung ist es vorgesehen, dass Calciumcarbonat, insbesondere bis zu 60 Gew.-% Calciumcarbonat, als Füllstoff verwendet wird. Insbesondere ist es bevorzugt, wenn 1 bis 60 Gew.-%, vorzugsweise 10 bis 58 Gew.-%, insbesondere 20 bis 55 Gew,-% Calciumcarbonat in der Beschichtungsmasse enthalten ist. Dabei kann in einer zweckmäßigen Ausführungsform vorgesehen sein, dass neben Calciumcarbonat kein weiterer Füllstoff in der erfindungsgemäßen Beschichtungsmasse anwesend ist. Des Weiteren stellen sich mit solchen Ausführungsformen erfindungsgemäßer Beschichtungsmassen besonders zufriedenstellende Resultate, insbesondere hinsichtlich Haftung, Verarbeitbarkeit und Deckungsvermögen, ein bei Verwendung mindestens zweier, insbesondere einer Vielzahl an, Calciumcarbonat-Chargen, die sich hinsichtlich ihrer Partikelgröße, insbesondere hinsichtlich ihres D50-Wertes, unterscheiden.

Bevorzugt wird dabei eine erste Charge Calciumcarbonat eingesetzt mit einem D50-Wert kleiner 9,0 µm, vorzugsweise im Bereich von 1,5 bis 7,5 µm, und eine zweite Charge an Calciumcarbonat mit einem Dso-Wert im Bereich von 9,0 bis 40 µm, bevorzugt im Bereich von 10 bis 35 µm und besonders bevorzugt im Bereich von 12 bis 25 µm. Hierbei ist die Menge an dem Calciumcarbonat der ersten Charge mit einem D50-Wert kleiner 9,0 µm bevorzugt größer als die Menge an dem Calciumcarbonat der zweiten Charge mit einem D50-Wert im Bereich von 9,0 bis 40 µm. Darüber hinaus hat es sich vielfach als zweckmäßig erwiesen, die erste Charge an Calciumcarbonat nochmals zu unterteilen in eine erste Untercharge mit einem D50-Wert im Bereich von 1,5 bis kleiner 4,0 µm und eine zweite Untercharge mit einem D50-Wert im Bereich von 4,0 µm bis kleiner 9,0 µm. Das Gewichtsverhältnis der ersten zur zweiten Untercharge kann dabei in einer Ausgestaltung auf einen Bereich von 1:2 bis 2:1 eingestellt werden. Die erste Untercharge der ersten Charge verfügt vorzugsweise über einen D98-Wert von maximal 15 µm, insbesondere von maximal 12 µm,' und/oder über einen D90-Wert von maximal 10 µm, insbesondere von maximal 6 µm, und/oder über einen Dio-Wert kleiner 2 µm, insbesondere kleiner 1 µm. Die zweite Untercharge der ersten Charge verfügt vorzugsweise über einen D98-Wert von maximal 40 µm, insbesondere von maximal 25 µm, und/oder über einen D90-Wert von maximal 20 µm, insbesondere von maximal 15 µm, und/oder über einen Dio-Wert kleiner 2 µm, insbesondere kleiner 1 µm.

Die erste Untercharge der ersten Charge verfügt vorzugsweise über einen D98-Wert von maximal 15 µm, insbesondere von maximal 12 µm, und/oder über einen D90-Wert von maximal 10 µm, insbesondere von maximal 6 µm, und/oder über einen Dio-Wert kleiner 2 µm, insbesondere kleiner 1 µm.

Der D50-Wert wird auch Halbwertskomgröße oder Medianwert genannt. Bei dem D50-Wert ist die Gewichtsmenge an Teilchen, die größer ist als der D50-Wert identisch mit der Menge an Teilchen, die kleiner ist als der D50-Wert. Bei dem Dio-Wert beträgt die Gewichtsmenge an Teilchen, die kleiner ist als der Dio-Wert 10 Prozent. Bei dem D90-Wert beträgt die Gewichtsmenge an Teilchen, die kleiner als der D90-Wert ist, 90 Prozent, bezogen auf das Gesamtgewicht der Partikel. Entsprechendes gitl für den D98-Wert. Für die Bestimmung der D10-, D50-, D90- und D98-Werte kann auf die Vorschrift gemäß DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnung von mittleren Partikelgrößen/-durchmessern, und Momenten aus Partikelgrößenverteilungen) zurückgegriffen werden.

In einer weiteren Ausgestaltung enthalten die erfindungsgemäßen Beschichtungsmassen zusätzlich mindestens ein Pigment, insbesondere Weißpigment. Als geeignete anorganische Weißpigmente kommen zum Beispiel Titandioxid, Zinkweiß, Farbenzinkoxid, Zinksulfid und/oder Lithopone und/oder Ettringit in Betracht. Überraschenderweise gelingt es mit den erfindungsgemäßen Beschichtungsmassen, ein zufriedenstellendes Trockendeckvermögen auch ohne Titandioxid oder nahezu ohne Titandioxid, d.h. mit Gehalten kleiner 1,0 Gewichtsprozent, zu erhalten. Wird ein Pigment zugesetzt, hat sich regelmäßig auch die, insbesondere vorgeschaltete, Zugabe mindestens eines Dispergieradditivs, beispielsweise auf Basis von Polyacrylaten wie Natriumpolyacrylat, als zweckdienlich erwiesen.

Exemplarisch seien als geeignete Pigmente anorganische Pigmente wie Bunt-, Schwarz- und Weißpigmente (Farbpigmente) sowie Glanzpigmente und organische Pigmente wie organische Bunt- und Schwarzpigmente genannt.

Als geeignete anorganische Weißpigmente kommen zum Beispiel Titandioxid, Zinkweiß, Farbenzinkoxid; Zinksulfid und/oder Lithopone und/oder Ettringit in Betracht. Diese anorganischen Weißpigmente, z.B. Titandioxid, liegen in den erfindungsgemäßen Beschichtungsmassen in einer geeigneten Ausführungsform in einer Menge im Bereich von 0,1 bis 10,0 Gew.-% oder in einer Menge im Bereich von 1,0 bis 5,0 Gew.-%, vor. Solche erfindungsgemäßen Besichtungsmassen sind besonders bevorzugt, bei denen Titandioxid in einer Menge kleiner 1,0 Gew.-%, bevorzugt kleiner 0,5 Gew.-%, jeweils bezogen auf das Gesamtgewicht der Zusammensetzung, vorliegt, wobei Beschichtungsmassen, die kein Titandioxid enthalten besonders bevorzugt sind.

Unter den anorganischen Schwarzpigmenten kann zum Beispiel ausgewählt werden unter Eisenoxidschwarz, Eisen-Mangan-Schwarz, Spinellschwarz und/oder Ruß.

Als geeignete anorganische Buntpigmente kann zum Beispiel zurückgegriffen werden auf Chromoxid, Chromoxidhydratgrün, Chromgrün, Cobaltgrün, Ultramaringrün, Kobaltblau, Ultramarinblau, Manganblau, Ultramarinviolett, Kobalt- und Manganviolett, Eisenoxidrot, Cersulfid, Molybdatrot, Ultramarinrot, Eisenoxidbraun, Mischbraun, Spinell- und Korundphasen, Chromtitangelb, Zinnzinktitanat, Chromorange, Eisenoxidgelb, Nickeltitangelb, Chromgelb und/oder Bismutvanadat.

Besonders geeignete Pigmente umfassen zum Beispiel Titandioxid, Zinksulfid, Zinkoxid, Baryt, Ruß, Eisenoxid, Chromoxid, Kobaltblau, Spinellpigment, Nickeltitanat, Chromtitanat und deren beliebige Mischungen.

Als geeignete organischen Buntpigmente kann zum Beispiel zurückgegriffen werden auf C.I. Pigment Blue 15, C.I. Pigment Blue 15:1, C.I. Pigment Blue,15:2, C.I. Pigment Blue 15:3, C.I. Pigment Blue 15:4, C.I. Pigment Blue 15:6, C.I Pigment Blue 16, C.I. Pigment Green 7, C.I. Pigment Green 36, C.I. Pigment Orange 36, C.I. Pigment Orange 43, C.I. Pigment Orange 73, C.I. Pigment Red 122, C.I. Pigment Red 168, C.I. Pigment Red 179, C.I. Pigment Red 188, C.I. Pigment Red 254, C.I. Pigment Red 264, C.I. Pigment Red 282, C.I. Pigment Violett 19, C.I. Pigment Violett 23, Pigment Yellow 74, Pigment Yellow 83, Pigment Yellow 97, C.I. Pigment Yellow 110, C.I. Pigment Yellow 138, C.I. Pigment Yellow 154 oder beliebige Mischungen dieser Pigmente.

Geeignete organische Pigmente können hierbei z.B. ausgewählt werden aus der Gruppe bestehend aus Monoazopigmenten, insbesondere C.I. Pigment Braun 25, C.I. Pigment Orange 5, 13, 38, oder 64, C.I. Pigment Rot 1, 2, 3, 4, 5, 8, 9, 12, 17, 22, 23, 31, 48: 1, 48: 2, 48: 3, 49, 51: 1, 52: 1, 52: 2, 53, 53: 1, 53: 3, 57: 1, 58: 2, 58: 4, 112, 146, 148, 170, 175, 184, 185, 187, 191: 1, 208, 210, 245, 247 und/oder 251, C.I. Pigment Gelb 1, 3, 62, 73, 120, 151, 181, 183 und/oder 191 und/oder C.I. Pigment Violett 32, Diazopigmenten, insbesondere C.I. Pigment Orange 16, 34, 44 und/oder 72 und/oder C.I. Pigment Gelb 12, 13, 14, 16, 17, 81, 106, 113, 126, 127, 155, 174, 176, 18 und/oder 188, Diazokondensationspigmenten, insbesondere C.I. Pigment Gelb 91, 95 und/oder 128 und/oder C.I. Pigment Rot 144, 166, 214, 220, 221, 242 und/oder 262 und/oder C.I. Pigment Braun 23 und/oder 41, Anthrachinonpigmenten, insbesondere C.I. Pigment Gelb 147, 177 und/oder 199 und/oder C.I. Pigment Violett 31, Anthrapyrimidinpigmenten, insbesondere C.I. Pigment Gelb 108, Chinacridonpigmenten, insbesondere C.I. Pigment Orange 48 und/oder 49 und/oder C.I. Pigment Rot 202, 206 und/oder 209 und/oder Diketopyrrolopyrrolpigmenten, insbesondere C.I. Pigment Orange 71 und/oder 81 und/oder C.I. Pigment Rot 270 und/oder 272, Dioxazinpigmenten, insbesondere C.I. Pigment Violett 37 und/oder C.I. Pigment Blau 80, Flavanthronpigmenten, insbesondere C.I. Pigment Gelb 24, Indanthronpigmenten, insbesondere C.I. Pigment Blau 60 und/oder 64, Isoindolinpigmenten, insbesondere C.I. Pigment Orange 61 und/oder 69 und/oder C.I. Pigment Rot 260 und/oder C.I. Pigment Gelb 185, Isoindolinonpigmenten, insbesondere C.I. Pigment Gelb 109,139 und/oder 173, Isoviolanthronpigmenten, insbesondere C.I. Pigment Violett 31, Metallkomplexpigmenten, insbesondere C.I. Pigment Rot 257 und/oder C.I. Pigment Gelb 117, 129, 151, 153 und/oder 177 und/oder C.I. Pigment Grün 8, Perinonpigmenten, insbesondere C.I. Pigment Orange 43, und/oder C.I. Pigment Rot 194, Perylenpigmenten, insbesondere C.I. Pigment Schwarz 31 und/oder C.I. Pigment Schwarz 32, C.I. Pigment Rot 123, 149, 178, 179, 190 und/oder 224 und/oder C.I. Pigment Violett 29, Pyranthronpigmenten, insbesondere C.I. Pigment Orange 51 und/oder C.I. Pigment Rot 216, Pyrazolochinazolonpigmenten, insbesondere C.I. Pigment Rot 251, Thioindigopigmenten, insbesondere C.I. Pigment Rot 88 und/oder 181 und/oder C.I. Pigment Violett 38, Triarylcarboniumpigmenten, insbesondere C.I. Pigment Blau 1, 61 und/oder 62 und/oder C.I. Pigment Grün 1 und/oder C.I. Pigment Rot 81, 81: 1 und/oder 169 und/oder C.I. Pigment Violett 1, 2, 3 und/oder 27.

Geeignete Pigmentmischungen können sowohl Mischungen aus anorganischen und organischen Pigmenten, als auch Mischungen aus unterschiedlichen anorganischen Pigmenten sowie Mischungen aus unterschiedlichen organischen Pigmenten umfassen.

Auch können die erfindungsgemäßen Beschichtungsmassen mindestens ein Bindemittel umfassen, wobei Calciumhydroxid im Sinne der Erfindung nicht das Bindemittel ist. Es kann sich hierbei um ein anorganisches Bindemittel oder auch um ein organisches Bindemittel handeln. Auch können anorganische und organische Bindemittel im Gemisch eingesetzt werden. Insbesondere ist es bevorzugt, wenn ein organisches Bindemittel enthalten ist, wobei der Gewichtsanteil des organischen Bindemittels vorzugsweise höher ist als der Gewichtsanteil an Calciumhydroxid, insbesondere größer als die Summe der Gewichtsanteile an Calciumhydroxid und Kaliumhydroxid.

Besonders bevorzugt sind auch solche Ausführungsformen der erfindungsgemäßen Beschichtungsmassen, die mindestens ein polymeres Bindemittel enthalten, insbesondere 1 Gew.-% bis 7 Gew.-% und besonders bevorzugt 2 bis 6 Gew.-% (jeweils Feststoffanteil) des Bindemittels. Als besonders geeignet hat sich Ethylen-Vinylacetat-Copolymer erwiesen, insbesondere in einer Menge von 0,5 Gew.-% bis 7 Gew.-% und besonders bevorzugt von 1,2 bis 6 Gew.-%, (jeweils Feststoffanteil). Die Kombination von Calciumhydroxid und einem polymeren Bindemittel, insbesondere Ethylen-Vinylacetat-Copolymer, hat sich als besonderes geeignet erwiesen, um eine Beschichtungsmasse mit biozider Langzeitwirkung zu erhalten, die überdies hervorragende Haftungseigenschaften aufweist.

In einer Ausgestaltung wird als Additiv ein Stabilisator verwendet. In einer weiteren zweckmäßigen Ausgestaltung wird zusätzlich oder alternativ ein Rheologieadditiv, insbesondere Verdickungsmittel, als Additiv eingesetzt. Als geeignet hat sich hierbei ein Anteil von 0,01 Gew.-% bis 2,5 Gew.-%, vorzugsweise 0,1 bis 1,75 Gew%, an Rheologieadditiv an der Beschichtungsmasse erwiesen. Bevorzugt wird als Rheologieadditiv auf ein Cellulosebasiertes Verdickungsmittel, insbesondere Methylhydroxyethylcellulose, zurückgegriffen. Als geeignetes Rheologieadditiv kann auch auf Polyvinylalkohol zurückgegriffen werden. Polyvinylalkohol-Verdicker liegen in den erfindungsgemäßen Beschichtungsmassen, bezogen auf den Rein- bzw. Feststoff, vorzugsweise in Mengen im Bereich von 0,01 bis 0,5, besonders bevorzugt im Bereich von 0,07 bis 0,3 Gew.-%, vor.

Zweckmäßige Verdickungsmittel im Sinne der vorliegenden Erfindung sind beispielsweise rheologiebeeinflussende Schichtsilikate, organisch modifizierte Schichtsilikaten, zum Beispiel Bentonite oder Hectorite, pyrogene Kieselsäure, zum Beispiel Aerosile, und thixotrope Alkydharze verstanden werden. Geeignete Verdickungsmittel können ferner ausgewählt werden aus der Gruppe bestehend aus Polyacrylat-Verdickern, Polyurethan-Verdickern, Polyharnstoff-Verdickern, Cellulose-Verdickern, insbesondere Hydroxyethylcellulose und/oder Methylcellulose, Polyvinylalkohol-Verdickern, Polyetherpolyol-Verdickern, Polysaccharid-Verdickern, insbesondere Xanthan und/oder Agar Agar, und beliebigen Mischungen hiervon. Besonders bevorzugt wird auf Polysacharid-Verdicker, insbesondere Xanthan, zurückgegriffen. Ein ganz besonders geeignetes Verdickungsmittel ist Methylhydroxyethylcellulose.

Als besonders geeignete Additive haben sich Alkylsilikonate, bevorzugt Methylsilikonate und insbesondere Kaliummethylsilikonat, und/oder Calciumchlorid erwiesen, wobei erfindungsgemäßen Beschichtungsmassen, welche eines der oder insbesondere beide der vorangehend genannten Additive enthalten eine nochmals verbesserte biozide Langzeitwirkung aufweisen. In den der erfindungsgemäßen Beschichtungsmassen liegen die Alkylsilikonate, insbesondere Kaliummethylsilikonat, bevorzugt in einer Menge im Bereich von 0,005 bis 1,0 und besonders bevorzugt im Bereich von 0,05 bis 0,75 Gew.-% vor.

In einer weiteren bevorzugten Ausgestaltung ist es vorgesehen, dass die erfindungsgemäße Beschichtungsmasse keine Silikate umfasst oder nicht mehr als 2 Gew.-%.

Der Wasseranteil liegt vorzugsweise bei 20 bis 60%, insbesondere 30 bis 50 %. In einer Ausgestaltung handelt es sich bei der Beschichtungsmasse vorzugsweise um eine Fertigbeschichtungsmasse, d.h. die Beschichtungsmasse kann unmittelbar aufgetragen werden, ohne dass eine weitere Behandlung, insbesondere eine Verdünnung mit Wasser, erforderlich ist. In einer alternativen, weniger bevorzugten Ausgestaltung ist die Beschichtungsmasse ausgelegt und eingerichtet, um vor dem Auftragen auf die zu Beschichten Oberfläche verdünnt zu werden, insbesondere mit Wasser.

In einer bevorzugten Ausgestaltung enthält die erfindungsgemäße Beschichtungsmasse 30 bis 55 Gew.-% Füllstoffe, 0,1 bis 3 Gew.-% Additive (Fest- bzw. Reinstoffanteil), 30 bis 50 Gew.-% Wasser, 0,1 bis 8 Gew.-% Bindemittel (Feststoffanteil) und 0,1 bis 10 % Pigment, wobei vorzugsweise Inhaltsstoffe, wie vorstehend beschrieben, zum Einsatz kommen und die Gesamtmenge der die erfindungsgemäße Beschichtungsmasse bildenden Komponenten stets 100 % ergibt. Besonders bevorzugt ist es dabei, wenn die Additive mindestens einen Stabilisator und/oder mindestens ein Rheologieadditiv, insbesondere Verdickungsmittel, insbesondere wie vorstehend beschrieben, sowie gegebenenfalls auch ein Dispergiermittel umfassen.

In einer weiteren geeigneten Ausgestaltung enthält die erfindungsgemäße Beschichtungsmasse Bindemittel, insbesondere Vinylacetat-basiertes Bindemittel, bezogen auf den Rein- bzw. Feststoff, im Bereich von 0,6 bis 7,0, bevorzugt im Bereich von 1,2 bis 4,5 Gew.-%; Füllstoffe, insbesondere Calciumcarbonat, im Bereich von 10 bis 65, bevorzugt im Bereich von 30 bis 60 Gew.-%; Calciumhydroxid im Bereich von 0,1 bis 10,0, bevorzugt im Bereich von 0,2 bis 5,0 Gew.-%; Base, insbesondere Kaliumhydroxid, bezogen auf den Rein- bzw. Feststoff, im Bereich von 0,0002 bis 0,04, bevorzugt im Bereich von 0,002 bis 0,02 Gew.-%; oxidativ trocknende Alkydharze, insbesondere in Form von Leinölfirnis, in einer Menge im Bereich von 0,01 bis 1,0, bevorzugt im Bereich von 0,1 bis 0,5 Gew.-%; Titandioxid im Bereich von 0,1 bis 10,0, bevorzugt im Bereich von 1,0 bis 5,0 Gew.-%; Entschäumer, bezogen auf den Rein- bzw. Feststoff, im Bereich von 0,05 bis 0,8, bevorzugt im Bereich von 0,1 bis 0,6 Gew.-%; und Wasser im Bereich von 20,0 bis 60,0, bevorzugt im Bereich von 30 bis 50 Gew.-%, wobei die Gesamtmenge der die erfindungsgemäße Beschichtungsmasse bildenden Komponenten stets 100 % ergibt.

In einer weiteren bevorzugten Ausgestaltung enthält die erfindungsgemäße Beschichtungsmasse Bindemittel, insbesondere Vinylacetat-basiertes Bindemittel, bezogen auf den Rein- bzw. Feststoff, im Bereich von 0,6 bis 7,0, bevorzugt im Bereich von 1,2 bis 4,5 Gew.-%; Füllstoffe, insbesondere Calciumcarbonat, im Bereich von 10 bis 65, bevorzugt im Bereich von 30 bis 60 Gew.-%; Calciumhydroxid im Bereich von 0,1 bis 10,0, bevorzugt im Bereich von 0,2 bis 5,0 Gew.-%; Base, insbesondere Kaliumhydroxid, bezogen auf den Rein- bzw. Feststoff, im Bereich von 0,0002 bis 0,04, bevorzugt im Bereich von 0,002 bis 0,02 Gew.-%; oxidativ trocknende Alkydharze, insbesondere in Form von Leinölfirnis, in einer Menge im Bereich von 0,01 bis 1,0, bevorzugt im Bereich von 0,1 bis 0,5 Gew.-%; Titandioxid im Bereich von 0,1 bis 10,0, bevorzugt im Bereich von 1,0 bis 5,0 Gew.-%; Entschäumer, bezogen auf den Rein- bzw. Feststoff, im Bereich von 0,05 bis 0,8, bevorzugt im Bereich von 0,1 bis 0,6 Gew.-%; Rheologieadditiv, insbesondere Cellulose-Verdicker und/oder Polyvinylalkohol-Verdicker, bezogen auf den Rein- bzw. Feststoff, im Bereich von 0,1 bis 1,2, bevorzugt im Bereich von 0,3 bis 0,8 Gew.-%; Alkylsilikonate, insbesondere Kaliummethylsilikonat, bezogen auf den Rein- bzw. Feststoff, im Bereich von 0,005 bis 1,0, bevorzugt im Bereich von 0,05 bis 0,75 Gew.-%; Dispergiermittel, bezogen auf den Rein- bzw. Feststoff, im Bereich von 0,035 bis 0,28, bevorzugt im Bereich von 0,07 bis 0,175 Gew.-%; und Wasser im Bereich von 20,0 bis 60,0, bevorzugt im Bereich von 30 bis 50 Gew.-%, wobei die Gesamtmenge der die erfindungsgemäße Beschichtungsmasse bildenden Komponenten stets 100 % ergibt.

Die Erfindung betrifft ferner die Verwendung der Beschichtungsmasse wie sie vorstehend beschrieben wurde als Anstrich oder Putz in Innenräumen, insbesondere Wohnräumen. Es hat sich überraschenderweise gezeigt, dass die biozide Langzeitwirkung auch in Innenräumen gewährleistet werden kann, obgleich dort eine vergleichsweise hohe Kohlenstoffdioxidkonzentration üblich ist, und zwar insbesondere auch dann, wenn die erfindungsgemäße Beschichtungsmasse mindestens ein Alkalihydroxid enthält. In einer geeigneten Ausgestaltung handelt es sich bei dem Putz um einen mineralischen Putz, d.h. es werden nur anorganische Bindemittel verwendet. Besonders bevorzugt sind jedoch Dispersionsputze, welche organische Bindemittel, insbesondere Kunstharze, verwenden. Insbesondere ist es bevorzugt, wenn ein organisches Bindemittel verwendet wird, wobei der Gewichtsanteil des organischen Bindemittels höher ist als der Gewichtsanteil an Calciumhydroxid, insbesondere größer als die Summe der Gewichtsanteile an Calciumhydroxid und Kaliumhydroxid.

Die Erfindung betrifft auch ein Herstellungsverfahren für die erfindungsgemäße Beschichtungsmasse wie vorstehend beschrieben, wobei die folgenden Schritte umfasst sind
i) Zugabe von Wasser,
ii) Zugabe mindestens eines Rheologieadditivs, insbesondere von Methylcellulose,
iii) Zugabe eines pH-Einstellmittels, insbesondere von Kaliumhydroxid in Form einer Kalilauge, insbesondere als Kalilauge mit einer Konzentration von 10 bis 30 Gew%,
iv-a) gegebenenfalls Zugabe von Dispergieradditiv, insbesondere bei Anwesenheit von mindestens einem Pigment in der Beschichtungsmasse,
iv-b) Zugabe mindestens eines Entschäumer und gegebenenfalls mindestens eines weiteren Rheologieadditivs,
v) gegebenenfalls Zugabe von Pigment,
vi) Zugabe von Füllstoff,
vii) Zugabe von Calciumhydroxid, insbesondere als Feststoff,
viii) vorzugsweise Zugabe von weiterem Füllstoff,
ix) Zugabe mindestens eines Stabilisators,
x) gegebenenfalls Zugabe von mindestens einem oxidativ trocknenden, insbesondere mittelöligen und/oder langöligen, Alkydharz, insbesondere von Leinölfirnis,
xi) vorzugsweise Zugabe von weiterem Entschäumer,
xii) vorzugsweise Zugabe eines polymeren Bindemittels, insbesondere als Polymerdispersion, vorzugsweise in einer Konzentration bis 7 Gew.-% (Feststoffanteil), bevorzugt im Bereich von 2 Gew.-% bis 5 Gew.-%
xiii) gegebenenfalls Zugabe von weiterem Wasser
xiv) wobei eine intermediäre Zusammensetzung mit einem pH-Wert größer 11,5 erhalten oder eingestellt wird, welche im Anschluss an die vorstehenden Arbeitsschritte
xv) für mindestens 120 Stunden bei 5 bis 50 °C, vorzugsweise im Bereich von 10 bis 45 °C getempert wird, insbesondere unter Luftzufuhr, bis sich ein pH-Wert kleiner oder gleich 11,5 einstellt und stabilisiert, insbesondere sich nicht mehr als um 0,2 pH innerhalb von 31 Tagen bei Raumtemperatur ändert.

In einer besonders geeigneten Ausführungsform umfasst das erfindungsgemäße Verfahren die folgenden Schritte:
i) Zugabe von Wasser,
ii) Zugabe mindestens eines Rheologieadditivs, insbesondere von Methylcellulose,
iii) Zugabe eines pH-Einstellmittels, insbesondere von Kaliumhydroxid in Form einer Kalilauge, insbesondere als Kalilauge mit einer Konzentration von 10 bis 30 Gew%,
iv-a) gegebenenfalls Zugabe von Dispergieradditiv, insbesondere bei Anwesenheit von mindestens einem Pigment in der Beschichtungsmasse,
iv-b) Zugabe mindestens eines Entschäumer und gegebenenfalls mindestens eines weiteren Rheologieadditivs,
v) gegebenenfalls Zugabe von Pigment,
vi) Zugabe von Füllstoff,
vii) Zugabe von Calciumhydroxid, insbesondere als Feststoff,
viii) Zugabe von weiterem Füllstoff,
ix) Zugabe mindestens eines Stabilisators,
x) gegebenenfalls Zugabe von mindestens einem oxidativ trocknenden, insbesondere mittelöligen und/oder langöligen, Alkydharz, insbesondere von Leinölfirnis,
xi) Zugabe von weiterem Entschäumer,
xii) Zugabe eines polymeren Bindemittels, insbesondere als Polymerdispersion, vorzugsweise in einer Konzentration bis 7 Gew.-% (Feststoffanteil), bevorzugt im Bereich von 2 Gew.-% bis 5 Gew.-%
xiii) gegebenenfalls Zugabe von weiterem Wasser
xiv) wobei eine intermediäre Zusammensetzung mit einem pH-Wert größer 11,5 erhalten oder eingestellt wird, welche im Anschluss an die vorstehenden Arbeitsschritte
xv) für mindestens 120 Stunden bei 5 bis 50 °C, vorzugsweise im Bereich von 10 bis 45 °C getempert wird, insbesondere unter Luftzufuhr, bis sich ein pH-Wert kleiner oder gleich 11,5 einstellt und stabilisiert, insbesondere sich nicht mehr als um 0,2 pH innerhalb von 31 Tagen bei Raumtemperatur ändert.

Raumtemperatur im Sinne der Erfindung soll 22 °C betragen.

Die Arbeitsschritte i) bis xiii) können in der obigen oder einer abweichenden Reihenfolge durchgeführt werden. In einer Variante des Verfahrens hat es sich als zweckmäßig erwiesen, erst alle Trockensubstanzen zuzugeben und diese erst anschließend mit flüssigen Zusammensetzungen zu vermischen. Es hat sich gezeigt, dass das obige Verfahren den gewünschten pH-Wert erzeugt, wobei die schonende Einstellung des pH-Werts durch die lang andauernde Behandlung gemäß Schritt xv) überraschenderweise eine bessere Langzeitwirkung der Beschichtungsmasse erzielt, als wenn eine Neutralisierung, beispielsweise durch Zugabe einer konzentrierten oder verdünnten wässrigen Säurelösung, eingestellt wird. Die biozide Langzeitstabilität bei dem obigen Verfahren ist besser, wobei die Ursache nicht genauer bekannt ist.

Die erfindungsgemäße Beschichtungsmasse zeichnet sich durch eine hohe Umweltverträglichkeit aus, wobei ein effektiver Langzeitschutz gegen Schimmel, Algenbildung und Bakterienbefall erreicht wird. Überraschenderweise kann auf herkömmliche organische Biozide gänzlich verzichtet werden. Es hat sich ferner gezeigt, dass einige der möglichen weiteren Inhaltsstoffe den bioziden Langzeitschutz erheblich beeinflussen und verbessern können. Die vorangehend genannten Vorteile können dabei insbesondere auch erhalten werden; wenn Calciumhydroxid in einer Menge von 0,1 bis 10 Gew.-%, bevorzugt von 0,3 bis 0,9 Gew.-%, und besonders bevorzugt von 0,3 bis 0,7 Gew.-% eingesetzt wird.

### Ausführungsbeispiele:

### Beispiel 1: Kalkfarbe

| Position | Rohstoff | Gew.% |
|---|---|---|
| 1 | Wasser | 40,92 |
| 2 | Hydroxymethylethylcellulose | 0,60 |
| 3 | KOH-Lsg. (20%-ig) | 0,08 |
| 4 | Dispergiermittel (Natriumpolyacrylat) | 0,1 |
| 5 | Entschäumer | 0,20 |
| 6 | Polyvinylalkohol (15%-ig) | 1,00 |
| 7 | Titandioxid | 5,00 |
| 8 | Ca₂CO₃ | 46,00 |
| 9 | Weißkalkhydrat (Calciumhyd-roxid) | 0,40 |
| 10 | Leinölfirnis | 0,20 |
| 11 | Kaliummethylsilikonat | 0,50 |
| 12 | Ethylen-Vinylacetat-Copolymer-Bindemittel | 5,00 |
| | | 100,00 |

### Beispiel 2: Kalkfarbe mit reduziertem TiO₂-Gehalt

| Position | Rohstoff | Gew.% |
|---|---|---|
| 1 | Wasser | 40,42 |
| 2 | Hydroymethylethylcellulose | o,6o |
| 3 | KOH (20%-ig) | 0,08 |
| 4 | Dispergiermittel (Natriumpolyacrylat) | 0,1 |
| 5 | Entschäumer | 0,20 |
| 6 | Polyvinylalkohol 15% | 1,00 |
| 7 | Titandioxid | 0,99 |
| 8 | Calciumcarbonat | 50,51 |
| 9 | Kalkweißhydrat (Calciumhydroxid) | 0,40 |
| 10 | Leinölfirnis | 0,20 |
| 11 | Kaliummethylsilikonat | 0,50 |
| 12 | Ethylen -Vinylacetat-Copolymer-Bindemittel | 5,00 |
| | | 100,00 |

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Beschichtungsmasse, insbesondere für Innenräume, enthaltend oder bestehend aus
a) mindestens einem Füllstoff,
b) Calciumhydroxid, wobei Calciumhydroxid in einer Menge von 0,1 bis 10 Gew.-% vorliegt,
c) Wasser, und
d) mindestens einem Bindemittel, insbesondere einem polymeren Bindemittel, Pigment und/oder Additiv,
e) mindestens ein Alkalihydroxid, welches in einer Menge im Bereich von 0,001 Gew.-% bis 0,1 Gew.-% vorliegt.

2. Beschichtungsmasse nach Anspruch 1, **dadurch gekennzeichnet, dass** das Alkalihydroxid Kaliumhydroxid ist.

3. Beschichtungsmasse nach Anspruch 1 oder 2, **dadurch gekennzeichnet, dass** diese einen pH-Wert im Bereich von 9,0 bis 11,5, bevorzugt im Bereich von 10,0 bis 11,5 und besonders bevorzugt im Bereich von 10,5 bis 11,5, aufweist oder auf einen Wert im Bereich von 9,0 bis 11,5, bevorzugt im Bereich von 10,0 bis 11,5 und besonders bevorzugt im Bereich von 10,5 bis 11,5, eingestellt ist.

4. Beschichtungsmasse nach einem der vorangehenden Ansprüche, **dadurch gekennzeichnet, dass**
die Beschichtungsmasse im Wesentlichen frei von organischen Fungiziden und/oder Algiziden, insbesondere im Wesentlichen frei von organischen Fungiziden und Algiziden, ist.

5. Beschichtungsmasse nach einem der Ansprüche 2 bis 4, **dadurch gekennzeichnet, dass**
das mindestens eine Alkalihydroxid, insbesondere Kaliumhydroxid, in einer Menge (Feststoffanteil) im Bereich von 0,002 Gew.-% bis 0,04 Gew.-%, vorliegt.

6. Beschichtungsmasse nach einem der vorangehenden Ansprüche, **dadurch gekennzeichnet, dass**
Titandioxid in einer Menge kleiner 1,0 Gew.-%, bevorzugt kleiner 0,5 Gew.-%, jeweils bezogen auf das Gesamtgewicht der Zusammensetzung, vorliegt oder dass kein Titandioxid in der Beschichtungsmasse enthalten ist und/oder dass Calciumhydroxid in einer Menge von 0,2 bis 1,5 Gew.-%, und besonders bevorzugt 0,3 bis 1,2 Gew.-%, vorliegt.

7. Beschichtungsmasse nach einem der vorangehenden Ansprüche, **dadurch gekennzeichnet, dass**
darin Calciumcarbonat, insbesondere bis zu 60 Gew.-% Calciumcarbonat, als Füllstoff enthalten ist.

8. Beschichtungsmasse nach einem der vorangehenden Ansprüche, **dadurch gekennzeichnet, dass**
das polymere Bindemittel, insbesondere Ethylen-Vinylacetat-Copolymer, in einer Menge im Bereich von 1 Gew.-% bis 7 Gew.-% (Feststoffanteil), und bevorzugt im Bereich von 2 Gew.-% bis 6 Gew.-% (Feststoffanteil), in der Beschichtungsmasse vorliegt.

9. Beschichtungsmasse nach einem der vorangehenden Ansprüche, ferner umfassend mindestens ein oxidativ trocknendes, bevorzugt mittelöliges und/oder langöliges, Alkydharz, insbesondere in Form von Leinölfirnis.

10. Beschichtungsmasse nach einem der vorangehenden Ansprüche, **dadurch gekennzeichnet, dass**
als Additiv ein Stabilisator und/oder ein Verdickungsmittel, insbesondere jeweils in einer Menge von 0,01 Gew.-% bis 2 Gew.-%, und vorzugsweise 0, 1 bis 1 Gew%, darin vorliegt.

11. Beschichtungsmasse nach einem der vorangehenden Ansprüche, **dadurch gekennzeichnet, dass**
als Additiv mindestens ein Alkylsilikonat, insbesondere ein Methylsilikonat, und/oder Calciumchlorid darin vorliegt.

12. Beschichtungsmasse nach einem der vorangehenden Ansprüche, **dadurch gekennzeichnet, dass**
der Wasseranteil im Bereich von 20 bis 60 Gew.-%, bevorzugt im Bereich von 30 bis 50 Gew.-% und besonders bevorzugt im Bereich von 35 bis 45 %, liegt.

13. Beschichtungsmasse nach einem der vorangehenden Ansprüche, **dadurch gekennzeichnet, dass**
diese eine pastöse Beschichtungsmasse ist.

14. Verwendung der Beschichtungsmasse nach einem der vorangehenden Ansprüche als Anstrich, Putz, insbesondere als Anstrich oder als Kunstharzputz in Innenräumen, insbesondere Wohnräumen.

15. Herstellungsverfahren für die Beschichtungsmasse nach einem der Ansprüche 1 bis 13, umfassend die folgenden Schritte:
i) Zugabe von Wasser,
ii) Zugabe mindestens eines Rheologieadditivs, insbesondere von Methylcellulose,
iii) Zugabe eines pH-Einstellmittels, insbesondere von Kaliumhydroxid in Form einer Kalilauge, insbesondere als Kalilauge mit einer Konzentration von 10 bis 30 Gew%,
iv-a) gegebenenfalls Zugabe von Dispergieradditiv, insbesondere bei Anwesenheit von mindestens einem Pigment in der Beschichtungsmasse,
iv-b) Zugabe mindestens eines Entschäumer und gegebenenfalls mindestens eines weiteren Rheologieadditivs,
v) gegebenenfalls Zugabe von Pigment,
vi) Zugabe von Füllstoff,
vii) Zugabe von Calciumhydroxid, insbesondere als Feststoff,
viii) vorzugsweise Zugabe von weiterem Füllstoff,
ix) Zugabe mindestens eines Stabilisators,
x) gegebenenfalls Zugabe von mindestens einem oxidativ trocknenden, insbesondere mittelöligen und/oder langöligen, Alkydharz, insbesondere von Leinölfirnis,
xi) vorzugsweise Zugabe von weiterem Entschäumer,
xii) vorzugsweise Zugabe eines polymeren Bindemittels, insbesondere als Polymerdispersion, vorzugsweise in einer Konzentration bis 7 Gew.-% (Feststoffanteil), bevorzugt im Bereich von 2 Gew.-% bis 5 Gew.-%
xiii) gegebenenfalls Zugabe von weiterem Wasser
xiv) wobei eine intermediäre Zusammensetzung mit einem pH-Wert größer 11,5 erhalten oder eingestellt wird, welche im Anschluss an die vorstehenden Arbeitsschritte
xv) für mindestens 120 Stunden bei 5 bis 50 °C, vorzugsweise im Bereich von 10 bis 45 °C getempert wird, insbesondere unter Luftzufuhr, bis sich ein pH-Wert kleiner oder gleich 11,5 einstellt und stabilisiert, insbesondere sich nicht mehr als um 0,2 pH innerhalb von 31 Tagen bei Raumtemperatur ändert.

## Claims

1. A coating composition, in particular for interior spaces, containing or consisting of
a) at least one filler,
b) calcium hydroxide, wherein calcium hydroxide is present in a quantity of 0.1 to 10 wt.%,
c) water, and
d) at least one binding agent, in particular a polymeric binding agent, pigment and/or additive,
e) at least one alkali hydroxide which is present in a quantity in the range of 0.001 wt.% to 0.1 wt.%.

2. The coating composition according to Claim 1, **characterized in that** the alkali hydroxide is potassium hydroxide.

3. The coating composition according to Claim 1 or 2, **characterized in that** it has a pH value in the range of 9.0 to 11.5, preferably in the range of 10.0 to 11.5 and, particularly preferably, in the range of 10.5 to 11.5, or is adjusted to a value in the range of 9.0 to 11.5, preferably in the range of 10.0 to 11.5 and, particularly preferably, in the range of 10.5 to 11.5.

4. The coating composition according to any one of the preceding claims, **characterized in that**
the coating composition is substantially free from organic fungicides and/or algicides, in particular substantially free from organic fungicides and algicides.

5. The coating composition according to any one of Claims 2 to 4, **characterized in that** the at least one alkali hydroxide, in particular potassium hydroxide, is present in a quantity (solids content) in the range of 0.002 wt.% to 0.04 wt.%.

6. The coating composition according to any one of the preceding claims, **characterized in that**
titanium dioxide is present in a quantity of less than 1.0 wt.%, preferably less than 0.5 wt.%, in each case based on the total weight of the composition, or that no titanium dioxide is contained in the coating composition and/or that calcium hydroxide is present in a quantity of 0.2 to 1.5 wt.%, and, particularly preferably, 0.3 to 1.2 wt.%.

7. The coating composition according to any one of the preceding claims, **characterized in that**
calcium carbonate, in particular up to 60 wt.% calcium carbonate, is contained therein as a filler.

8. The coating composition according to any one of the preceding claims, **characterized in that**
the polymeric binding agent, in particular ethylene-vinyl acetate copolymer, is present in a quantity in the range of 1wt.% to 7 wt.% (solids content), and preferably in the range of 2 wt.% to 6 wt.% (solids content), in the coating composition.

9. The coating composition according to any one of the preceding claims, further comprising at least one oxidatively drying, preferably medium-oil and/or long-oil, alkyd resin, in particular in the form of boiled linseed oil.

10. The coating composition according to any one of the preceding claims, **characterized in that**
a stabilizer and/or a thickening agent, in particular in each case in a quantity of 0.01 wt.% to 2 wt.%, and preferably 0.1 to 1 wt.%, is/are present therein as an additive.

11. The coating composition according to any one of the preceding claims, **characterized in that**
at least one alkyl siliconate, in particular a methyl siliconate, and/or calcium chloride is/are present therein as an additive.

12. The coating composition according to any one of the preceding claims, **characterized in that**
the water content lies in the range of 20 to 60 wt.%, preferably in the range of 30 to 50 wt.% and, particularly preferably, in the range of 35 to 45%.

13. The coating composition according to any one of the preceding claims, **characterized in that**
it is a pasty coating composition.

14. Use of the coating composition according to any one of the preceding claims as a paint, plaster, in particular as a paint or as a synthetic resin plaster in interior spaces, in particular living spaces.

15. A production method for the coating composition according to any one of Claims 1 to 13, comprising the following steps:
i) addition of water,
ii) addition of at least one rheology additive, in particular of methyl cellulose,
iii) addition of a pH adjusting agent, in particular of potassium hydroxide in the form of a potassium hydroxide solution, in particular as a potassium hydroxide solution having a concentration of 10 to 30 wt.%,
iv-a) optionally, addition of dispersing additive, in particular if at least one pigment is present in the coating composition,
iv-b) addition of at least one defoaming agent and, optionally, at least one further rheology additive,
v) optionally, addition of pigment,
vi) addition of filler,
vii) addition of calcium hydroxide, in particular as a solid,
viii) preferably addition of further filler,
ix) addition of at least one stabilizer,
x) optionally, addition of at least one oxidatively drying, in particular medium-oil and/or long-oil, alkyd resin, in particular of boiled linseed oil,
xi) preferably addition of further defoaming agent,
xii preferably addition of a polymeric binding agent, in particular as a polymer dispersion, preferably in a concentration of up to 7 wt.% (solids content), preferably, in the range of 2 wt.% to 5 wt.%.
xiii) optionally, addition of further water,
xiv) wherein an intermediary composition having a pH value of greater than 11.5 is obtained or adjusted, which, following the above work steps,
xv) is tempered for at least 120 hours at 5 to 50°C, preferably in the range of 10 to 45°C, in particular with an air supply, until a pH value of less than or equal to 11.5 is adjusted and stabilized, in particular is altered by not more than 0.2 pH within 31 days at room temperature.

## Revendications

1. Substance de revêtement, en particulier pour des espaces intérieurs, contenant ou composée de
a) au moins un matériel de remplissage,
b) l'hydroxyde de calcium, dans lequel l'hydroxyde de calcium est présent dans une quantité de 0,1 à 10% en poids,
c) l'eau, et
d) au moins un liant, en particulier un liant polymère, un pigment et/ou un additif,
e) au moins un hydroxyde alcalin, qui est présent dans une quantité comprise dans la plage de 0,001 % en poids à 0,1 % en poids.

2. Substance de revêtement selon la revendication 1, **caractérisée en ce que** l'hydroxyde alcalin est un hydroxyde de potassium.

3. Substance de revêtement selon la revendication 1 ou 2. **caractérisée en ce que** celle-ci présente une valeur pH dans la plage de 9,0 à 11,5, préférablement dans la plage de 10,0 à 11,5 et particulièrement préférablement dans la plage de 10,5 à 11,5, ou est ajustée sur une valeur dans la plage de 9,0 à 11,5, préférablement dans la plage de 10,0 à 11,5 et particulièrement préférablement dans la plage de 10,5 à 11,5.

4. Substance de revêtement selon l'une quelconque des revendications précédentes, **caractérisée en ce que**
la substance de revêtement est sensiblement exempte de fongicides et/ou d'algicides organiques, en particulier sensiblement exempte de fongicides et d'algicides organiques.

5. Substance de revêtement selon l'une quelconque des revendications 2 à 4, **caractérisée en ce que**
l'au moins un hydroxyde alcalin, en particulier un hydroxyde de potassium, est présent dans une quantité (part de matière solide) dans la plage de 0,002 % en poids à 0,04 % en poids.

6. Substance de revêtement selon l'une quelconque des revendications précédentes, **caractérisée en ce que**
le dioxyde de titane est présent dans une quantité inférieure à 1,0 % en poids, préférablement inférieure à 0,5 % en poids, respectivement par rapport au poids total de la composition, ou **en ce qu'**aucun dioxyde de titane n'est contenu dans la substance de revêtement et/ou **en ce que**
l'hydroxyde de calcium est présent dans une quantité de 0,2 à 1,5 % en poids, et particulièrement préférablement de 0,3 à 1,2 % en poids.

7. Substance de revêtement selon l'une quelconque des revendications précédentes, **caractérisée en ce que**
du carbonate de calcium, en particulier du carbonate de calcium jusqu'à 60 % en poids, est contenu au titre du matériel de remplissage.

8. Substance de revêtement selon l'une quelconque des revendications précédentes, **caractérisée en ce que**
le liant polymère, en particulier le copolymère d'éthylène-acétate de vinyle, est présent dans la substance de revêtement dans une quantité dans la plage de 1 % en poids à 7 % en poids (part de matière solide), et préférablement dans la plage de 2 % en poids à 6 % en poids (part de matière solide).

9. Substance de revêtement selon l'une quelconque des revendications précédentes, comprenant en outre au moins une résine alkyde à séchage par oxydation, préférablement glycérophtalique moyen et/ou long, en particulier sous forme de vernis d'huile de lin.

10. Substance de revêtement selon l'une quelconque des revendications précédentes, **caractérisée en ce qu'**
au titre de l'additif un stabilisant et/ou un agent épaississant, est présent en particulier respectivement dans une quantité de 0,01 % en poids à 2 % en poids, et de préférence 0,1 à 1 % en poids.

11. Substance de revêtement selon l'une quelconques des revendications précédentes, **caractérisée en ce qu'**
au titre de l'additif au moins un alkyl siliconate, en particulier un méthylsiliconate, et/ou un chlorure de calcium est présent.

12. Substance de revêtement selon l'une quelconque des revendications précédentes, **caractérisée en ce que**
la part d'eau est comprise dans la plage de 20 à 60 % en poids, préférablement dans la plage de 30 à 50 % en poids et particulièrement préférablement dans la plage de 35 à 45 %.

13. Substance de revêtement selon l'une quelconque des revendications précédentes, **caractérisée en ce que**
celle-ci est une substance de revêtement pâteuse.

14. Utilisation de la substance de revêtement selon l'une quelconque des revendications précédentes sous forme de peinture, d'enduit, en particulier sous forme de peinture ou sous forme d'enduit en résine artificielle dans des espaces intérieurs, en particulier des pièces d'habitation.

15. Procédé de fabrication de la substance de revêtement selon l'une quelconques des revendications 1 à 13, comprenant les étapes suivantes :
i) ajouter de l'eau,
ii) ajouter au moins un additif de rhéologie, en particulier de la méthylcellulose,
iii) ajouter un agent d'ajustement du pH, en particulier un hydroxyde de potassium sous forme d'hydrate de potassium, en particulier sous forme d'hydrate de potassium dans une concentration de 10 à 30 % en poids,
iv-a) ajouter éventuellement un additif dispersif, en particulier en présence d'au moins un pigment dans la substance de revêtement,
iv-b) ajouter au moins un agent antimousse et éventuellement au moins un autre additif de rhéologie,
v) ajouter éventuellement un pigment,
vi) ajouter un matériel de remplissage,
vii) ajouter de l'hydroxyde de calcium, en particulier sous forme de matière solide,
viii) ajouter de préférence un autre matériel de remplissage,
ix) ajouter au moins un stabilisant,
x) ajouter éventuellement au moins une résine alkyde à séchage par oxydation, en particulier glycérophtalique moyen et/ou long, en particulier du vernis d'huile de lin,
xi) ajouter de préférence un autre agent antimousse,
xii ajouter de préférence un liant polymère, en particulier sous la forme d'une dispersion polymère, de préférence dans une concentration jusqu'à 7 % en poids (part de matière solide), préférablement dans la plage de 2 % en poids à 5 % en poids
xiii) ajouter éventuellement de l'eau supplémentaire
xiv) une composition intermédiaire étant obtenue ou ajustée avec une valeur pH supérieure à 11,5, qui, suite aux étapes de procédé précédentes,
xv) est recuite pendant au moins 120 heures entre 5 et 50°C, de préférence dans la plage de 10 à 45 °C, en particulier sous admission d'air, jusqu'à ce qu'une valeur pH inférieure ou égale à 11,5 soit ajustée et stabilisée, en particulier ne change plus de 0,2 pH sous 31 jours à température ambiante.
